# EUROPÄISCHE PATENTSCHRIFT

(11) **EP 2 552 779 B1**
(45) Veröffentlichungstag und Bekanntmachung des Hinweises auf die Patenterteilung: **14.09.2016**
(21) Anmeldenummer: 11711471.0
(22) Anmeldetag: 25.03.2011
(51) Int. Cl.: B64D 11/02, B64D 11/00

(54) **SANITÄRMODULANORDNUNG ZUR INSTALLATION IN EINER FLUGZEUGKABINE**
SANITARY MODULE ARRANGEMENT FOR INSTALLATION IN AN AIRCRAFT CABIN
AGENCEMENT DE MODULE SANITAIRE POUR L'INSTALLATION DANS UNE CABINE D'AÉRONEF

(30) Priorität: 26.03.2010 US 317785 P; 26.03.2010 DE 102010012989
(43) Veröffentlichungstag der Anmeldung: 06.02.2013
(60) Teilanmeldung: 16180313.5
(73) Patentinhaber: Airbus Operations GmbH, 21129 Hamburg (DE)
(72) Erfinder: EHLERS, Bernd, 20144 Hamburg (DE); HERZOG, Mark, 22885 Barsbuettel (DE)
(74) Vertreter: Schicker, Silvia
(86) Internationale Anmeldenummer: PCT/EP2011/001517
(87) Internationale Veröffentlichungsnummer: WO 2011/116982

(56) Entgegenhaltungen:
- EP-A2- 0 850 833
- EP-A2- 1 655 172
- US-A1- 2005 230 539
- "DASELL CABIN INTERIORS, CUSTOMIZATION, LAVATORIES", INTERNET CITATION, 8. Juli 2007 (2007-07-08), Seiten 1-2, XP002487472, Gefunden im Internet: URL:http://www.dasell.com [gefunden am 2007-07-08]

## Beschreibung

Die Erfindung betrifft eine zur Installation in einer Flugzeugkabine vorgesehene Sanitärmodulanordnung, ein mit einer derartigen Sanitärmodulanordnung ausgestattetes Flugzeug sowie ein Verfahren zum Betreiben eines derartigen Flugzeugs.

Moderne Verkehrsflugzeuge sind üblicherweise mit Bordküchen mit voller Küchenfunktionalität ausgestattet. Eine Flugzeugbordküche ist beispielsweise in der DE 10 2006 023 047 A1 beschrieben. Auf Kurzstreckenflügen des unteren Preissegments wird den Passagieren häufig jedoch nur ein reduzierter Service angeboten, das heißt es werden lediglich Getränke und/oder kleine Snacks an die Passagiere verteilt. Die an die Passagiere auszugebenden Getränke und/oder Snacks können in wenigen Trolleys untergebracht werden. Mit Öfen, Kühlboxen, Getränkezubereitungseinrichtungen sowie ausreichend Stauraum für die Unterbringung von mit vielfältigen Serviceprodukten befüllten Trolleys ausgestattete Bordküchen sind für die Bereitstellung dieses reduzierten Services unnötig.

Die EP 0 850 833 A2 betrifft ein gattungsgemäßes Sanitärmodul sowie ein über ein Schienensystem zwischen zwei Positionen verschiebbares Schrankelement. In einer ersten Position ist das Schrankelement in einem Innenraum des Sanitärmoduls aufgenommen, so dass eine Seitenfläche des Schrankelements einen Teilabschnitt einer Seitenfläche des Sanitärmoduls bildet. In einer zweiten Position ist das Schrankelement dagegen benachbart zu dem Sanitärmodul angeordnet. Ein Haltesystem zur Befestigung des Schrankelements in seiner ersten oder seiner zweiten Position umfasst federbelastete Verriegelungsstifte, die dazu vorgesehen sind, in entsprechenden, in einer oberen Schiene sowie einer unteren Schiene vorgesehenen Aufnahmen zu verrasten. Die Verriegelungsstifte werden durch in einer Seitenwand des Sanitärmoduls und einer Seitenwand des Schrankelements aufgenommene Hebel betätigt.

Der Erfindung liegt die Aufgabe zugrunde, eine Sanitärmodulanordnung anzugeben, die es ermöglicht, den Einbauraumbedarf einer Bordküche in einer Flugzeugkabine zu verringern. Ferner liegt der Erfindung die Aufgabe zugrunde, ein mit einer derartigen Sanitärmodulanordnung ausgestattetes Flugzeug sowie ein Verfahren zum Betreiben eines derartigen Flugzeugs bereitzustellen.

Diese Aufgabe wird durch eine Sanitärmodulanordnung mit den Merkmalen des Anspruchs 1, ein Flugzeug mit den Merkmalen des Anspruchs 8 und ein Verfahren zum Betreiben eines Flugzeugs mit den Merkmalen des Anspruchs 9 gelöst.

Eine zur Installation in einer Flugzeugkabine vorgesehene Sanitärmodulanordnung umfasst ein Sanitärmodul, dessen Innenraum durch eine Begrenzungswand von einem zu dem Sanitärmodul benachbarten Bereich der Flugzeugkabine getrennt ist. Ein Abschnitt des zu dem Sanitärmodul benachbarten Bereichs der Flugzeugkabine ist vorzugsweise ein Kabinenbereich vor einem Ausgang oder ein anderer Kabinenbereich, in dem keine Passagiersitze oder andere Einbauten vorgesehen sind. In dem Innenraum des Sanitärmoduls ist eine Sanitäreinrichtung, wie zum Beispiel eine Toilette angeordnet. Darüber hinaus können in dem Innenraum des Sanitärmoduls ein Waschbecken mit einem Wasserhahn, ein Spiegel und/oder ein beispielsweise in Form eines Schranks ausgebildetes Monument zur Unterbringung von Toilettenpapier, Papierhandtüchern oder dergleichen vorgesehen sein.

In dem Innenraum des Sanitärmoduls ist ferner ein erster Trolleyabstellplatz zur Unterbringung mindestens eines zur Aufnahme von Versorgungsgütern für die Passagiere in der Flugzeugkabine geeigneten Trolleys in dem Innenraum des Sanitärmoduls vorgesehen. Die erfindungsgemäße Sanitärmodulanordnung umfasst ferner einen benachbart zu einer Außenfläche der Begrenzungswand vorgesehenen zweiten Trolleyabstellplatz zur Unterbringung mindestens eines zur Aufnahme von Versorgungsgütern für die Passagiere in der Flugzeugkabine geeigneten Trolleys außerhalb des Sanitärmoduls. Eine Trolleybefestigungsvorrichtung umfasst ein Haltersystem zur lösbaren Befestigung eines auf dem zweiten Trolleyabstellplatz abgestellten Trolleys, wobei das Haltersystem einen an der Außenfläche der Begrenzungswand angebrachten Halter aufweist. Der Halter des Haltersystems kann beispielsweise in einem Bereich der Außenfläche der Begrenzungswand angebracht sein, der einen nicht mit Passagiersitzen oder anderen Einbauten belegten Kabinenbereich begrenzt. Dieser Kabinenbereich kann beispielsweise ein vor einem Ausgang liegender Kabinenbereich oder ein Gangbereich sein.

Die erfindungsgemäße Sanitärmodulanordnung ermöglicht die Unterbringung eines Trolleys oder einer Mehrzahl von Trolleys außerhalb einer Flugzeugbordküche. Während des Starts und während der Landung, d.h. während der Flugphasen, in denen das Sanitärmodul den Passagieren aus Sicherheitsgründen ohnehin nicht zur Benutzung zur Verfügung steht, steht der erste Trolleyabstellplatz in dem Innenraum des Sanitärmoduls für die Unterbringung eines oder mehrerer Trolleys zur Verfügung. Wenn sich das Flugzeug in Reiseflughöhe befindet, kann dagegen der benachbart zu der Außenfläche der Begrenzungswand vorgesehene zweite Trolleyabstellplatz zur Unterbringung des/der Trolleys genutzt werden. Die Flugzeugbordküche kann dadurch erheblich platzsparender gestaltet werden. Wenn weitere in der Flugzeugbordküche vorhandene Einrichtungen, wie z.B. Öfen, Kühlboxen, etc. beispielsweise in lediglich auf Kurzstreckenflügen eingesetzten Flugzeugen nicht benötigt werden, kann sogar ganz auf die Flugzeugbordküche verzichtet werden. In jedem Fall ist eine Gewichts- und Einbauraumeinsparung möglich, wobei der eingesparte Einbauraum beispielsweise für die Installation von zusätzlichen Sitzplätzen genutzt werden kann.

Wenn ein Trolley auf dem zweiten Trolleyabstellplatz abgestellt ist, sorgt das Haltersystem der Trolleybefestigungsvorrichtung für eine sichere Befestigung des Trolleys in seiner Position auf dem zweiten Trolleyabstellplatz, bis der Trolley tatsächlich zur Versorgung der Passagiere mit Serviceprodukten benötigt wird. Ein Haltersystem, das einen an der Außenfläche der Begrenzungswand angebrachten Halter aufweist, ist vergleichsweise kostengünstig realisierbar und erfordert keine grundlegende Umgestaltung des Sanitärmoduls. Es ist daher ggf. sogar möglich, bestehende, in einer Flugzeugkabine installierte Sanitärmodule mit einer Trolleybefestigungsvorrichtung auszustatten und dadurch in eine erfindungsgemäße Sanitärmodulanordnung zu integrieren.

Der Halter des Haltersystems ist vorzugsweise derart schwenkbar an der Außenfläche der Begrenzungswand angebracht, dass der Halter zwischen einer Ruheposition und einer Betriebsposition verschwenkbar ist. In seiner Ruheposition erstreckt sich der Halter vorzugsweise im Wesentlichen parallel zu der Außenfläche der Begrenzungswand. Dies ermöglicht eine platzsparende Aufbewahrung des Halters, wenn der Halter nicht in Betrieb ist. In seiner Betriebsposition erstreckt sich der Halter vorzugsweise zumindest abschnittsweise im Wesentlichen parallel zu einer Deckfläche eines auf dem zweiten Trolleyabstellplatz abgestellten Trolleys. Beispielsweise kann sich der Halter in seiner Betriebsposition im Wesentlichen senkrecht zur Außenfläche der Begrenzungswand von der Außenfläche der Begrenzungswand erstrecken. Die Form des Halters ist vorzugsweise an die Form und die Anzahl der mittels des Haltersystems an der Außenfläche der Begrenzungswand zu befestigenden Trolleys angepasst. Beispielsweise kann die Länge des Halters so gewählt sein, dass der Halter die Deckflächen einer gewünschten Anzahl von auf dem zweiten Trolleyabstellplatz abgestellten Trolleys übergreift, wenn die Trolleys nebeneinander benachbart zu der Außenfläche der Begrenzungswand positioniert sind. Der Halter kann, je nach Bedarf, stabförmig oder plattenförmig ausgebildet sein. Ein plattenförmig ausgebildeter Halter hat den Vorteil, dass er als Ablage- und Arbeitsfläche genutzt werden kann, wenn er sich in seiner Betriebsposition im Wesentlichen senkrecht zur Außenfläche der Begrenzungswand von der Außenfläche der Begrenzungswand erstreckt.

Der Halter des Haltersystems kann ferner einen ersten Abschnitt sowie einen gelenkig mit dem ersten Abschnitt verbundenen zweiten Abschnitt umfassen. Auch ein zwei Abschnitte umfassender Halter kann derart schwenkbar an der Außenfläche der Begrenzungswand angebracht sein, dass der Halter zwischen einer Ruheposition und einer Betriebsposition verschwenkbar ist. Wenn sich der Halter in seiner Ruheposition befindet, erstrecken sich der erste und der zweite Abschnitt des Halters vorzugsweise im Wesentlichen parallel zu der Außenfläche der Begrenzungswand, wodurch eine platzsparende Aufbewahrung des Halters in seiner Ruheposition möglich ist. Wenn sich der Halter dagegen in seiner Betriebsposition befindet, erstreckt sich der erste Abschnitt des Halters zumindest abschnittsweise im Wesentlichen parallel zu einer Deckfläche eines auf dem zweiten Trolleyabstellplatz abgestellten Trolleys. Beispielsweise kann sich der erste Abschnitt des Halters in seiner Betriebsposition im Wesentlichen senkrecht zur Außenfläche der Begrenzungswand von der Außenfläche der Begrenzungswand erstrecken.

Die Form des ersten Halterabschnitts ist vorzugsweise an die Form und die Anzahl der mittels des Haltersystems an der Außenfläche der Begrenzungswand zu befestigenden Trolleys angepasst. Beispielsweise kann die Länge des ersten Halterabschnitts so gewählt sein, dass der erste Halterabschnitt die Deckflächen einer gewünschten Anzahl von auf dem zweiten Trolleyabstellplatz abgestellten Trolleys übergreift, wenn die Trolleys nebeneinander benachbart zu der Außenfläche der Begrenzungswand positioniert sind. Bei einem mit zwei Abschnitten versehen Halter ist vorzugsweise zumindest der erste Halterabschnitt plattenförmig ausgebildet, um eine Nutzung des ersten Halterabschnitts als Ablage- und Arbeitsfläche zu ermöglichen, wenn sich der Halter in seiner Betriebsposition befindet.

Der zweite Abschnitt des sich in seiner Betriebsposition befindenden Halters erstreckt sich dagegen vorzugsweise zumindest abschnittsweise im Wesentlichen parallel zu einer von der Begrenzungswand abgewandten Seitenfläche des auf dem zweiten Trolleyabstellplatz abgestellten Trolleys. Mit anderen Worten, wenn sich der Halter in seiner Betriebsposition befindet, übergreift der Halter den auf dem zweiten Trolleyabstellplatz abgestellten Trolley und sorgt so für eine sichere Fixierung des Trolleys in seiner Position auf dem zweiten Trolleyabstellplatz.

Falls gewünscht, kann der Halter mit einer Verbindungsvorrichtung versehen sein, die dazu eingerichtet ist, mit einer komplementären Verbindungsvorrichtung zusammenzuwirken, die beispielsweise im Bereich der Deckfläche oder einer Seitenwand eines auf dem zweiten Trolleyabstellplatz abgestellten Trolleys vorgesehen ist. Ein derartiges Verbindungssystem kann für eine sichere Verbindung des Halters mit einem auf dem zweiten Trolleyabstellplatz abgestellten Trolley sorgen.

Das Haltersystem umfasst vorzugsweise ferner einen Verriegelungsmechanismus zur Verriegelung des Halters in seiner Ruheposition. Der Verriegelungsmechanismus kann beispielsweise an der Außenfläche der Begrenzungswand montiert sein und einen sich im Wesentlichen senkrecht zu der Außenfläche der Begrenzungswand von der Außenfläche der Begrenzungswand erstreckenden Befestigungsabschnitt umfassen. An dem Befestigungsabschnitt kann ein Riegel zwischen einer Verriegelungsstellung und einer Entriegelungsstellung schwenkbar befestigt sein. Vorzugsweise erstreckt sich der Riegel im Wesentlichen parallel zu der Außenfläche der Begrenzungswand. In seiner Verriegelungsstellung ist der Riegel dann so positioniert, dass der Verriegelungsmechanismus den parallel zu der Außenfläche der Begrenzungswand angeordneten Halter übergreift und in seiner Position hält. Dabei kann eine von der Außenfläche der Begrenzungswand abgewandte Fläche des Halters mit dem Riegel zusammenwirken. Durch Verschwenken des Riegels in seine Entriegelungsstellung wird der Halter dagegen freigegeben, das heißt, die von der Außenfläche der Begrenzungswand abgewandte Fläche des Halters wirkt nicht länger mit dem Riegel zusammen, so dass der Halter aus seiner Ruheposition in seine Betriebsposition verschwenkt werden kann.

In der Begrenzungswand des Sanitärmoduls ist eine verschließbare Öffnung ausgebildet, durch die ein Trolley zwischen dem ersten Trolleyabstellplatz in dem Innenraum des Sanitärmoduls und dem benachbart zu einer Außenfläche der Begrenzungswand vorgesehenen zweiten Trolleyabstellplatz verschoben werden kann. Die Form und die Größe der Öffnung sind vorzugsweise an die Form und die Größe der Trolleys angepasst, die durch die Öffnung zwischen dem ersten Trolleyabstellplatz und dem zweiten Trolleyabstellplatz verschoben werden sollen. Bei einer derartigen Ausgestaltung des Sanitärmoduls ist es nicht länger erforderlich, die Tür des Sanitärmoduls zu nutzen, um Trolleys zwischen dem ersten Trolleyabstellplatz und dem zweiten Trolleyabstellplatz zu verschieben. Die Form und die Größe der Tür sowie das Design des Kabinenbereichs vor der Tür müssen dann nicht länger so gestaltet sein, dass sie eine Umpositionierung des Trolleys durch die Tür erlauben. Ferner kann der Innenbereich des Sanitärmoduls flexibler gestaltet werden, da es nicht länger erforderlich ist, die Tür so freizuhalten, dass ein Trolley durch die Tür geschoben werden kann.

Die erfindungsgemäße Sanitärmodulanordnung umfasst ferner ein Trolleygehäuse zur Aufnahme mindestens eines Trolleys. Das Trolleygehäuse umfasst eine Deckplatte und eine erste Seitenwand, die sich im Wesentlichen senkrecht zu der Deckplatte erstreckt. Ferner umfasst das Trolleygehäuse eine der ersten Seitenwand gegenüberliegende zweite Seitenwand. Falls das Trolleygehäuse zur Aufnahme mehrerer Trolleys vorgesehen ist, kann es auch eine Zwischenwand oder mehrere Zwischenwände umfassen, die sich im Wesentlichen parallel zu den Seitenwänden erstreckt/erstrecken und das Trolleygehäuse in mehrere, zur Aufnahme jeweils eines Trolleys geeignete Fächer unterteilt/unterteilen. Die erste Seitenwand des Trolleygehäuses ist dazu eingerichtet, die in der Begrenzungswand ausgebildete Öffnung zu verschließen, wenn das Trolleygehäuse einen auf dem ersten Trolleyabstellplatz abgestellten Trolley aufnimmt. Ferner ist die zweite Seitenwand des Trolleygehäuses dazu eingerichtet, die in der Begrenzungswand ausgebildete Öffnung zu verschließen, wenn das Trolleygehäuse einen auf dem zweiten Trolleyabstellplatz abgestellten Trolley aufnimmt.

Ein derart gestaltetes Trolleygehäuse bildet eine Art "Schublade", die durch die in der Begrenzungswand ausgebildete Öffnung aus dem Sanitärmodul herausgezogen werden kann, um einen Trolley oder mehrere Trolleys zwischen dem ersten Trolleyabstellplatz und dem zweiten Trolleyabstellplatz zu verfahren. Falls gewünscht kann in dem Innenraum des Sanitärmoduls und/oder in dem zu dem Sanitärmodul benachbarten Kabinenbereich eine Führungseinrichtung, beispielsweise eine Schiene oder dergleichen vorgesehen sein, die die Verschiebung des Trolleygehäuses durch die in der Begrenzungswand ausgebildete Öffnung führt.

Bei einer noch einfacher gestalteten Variante der erfindungsgemäßen Sanitärmodulanordnung ist ein Trolley so geformt, dass seine erste Seitenwand die in der Begrenzungswand ausgebildete Öffnung verschließt, wenn der Trolley auf dem ersten Trolleyabstellplatz abgestellt ist. Eine zweite Seitenwand des Trolleys verschließt dann die in der Begrenzungswand ausgebildete Öffnung, wenn der Trolley auf dem zweiten Trolleyabstellplatz abgestellt ist.

Vorzugsweise umfasst das Trolleygehäuse eine Mehrzahl von Rollen, die es ermöglichen, das Trolleygehäuse durch die in der Begrenzungswand ausgebildete Öffnung zu fahren. Ferner ist das Trolleygehäuse vorzugsweise nicht mit einer Bodenplatte, sondern lediglich mit Seitenwänden, einer Deckplatte sowie ggf. Zwischenwänden versehen. Die ohnehin an einer Bodenplatte eines Trolleys vorhandenen Rollen können somit auch dann zum Verfahren des Trolleys genutzt werden, wenn der Trolley in dem Trolleygehäuse aufgenommen ist und durch die in der Begrenzungswand ausgebildete Öffnung zwischen dem ersten und dem zweiten Trolleyabstellplatz verfahren werden soll. Die Rollen des Trolleygehäuses sind vorzugsweise an einem Randabschnitt der Seitenwände und/oder der Zwischenwände des Trolleygehäuses befestigt, der einem Boden der Flugzeugkabine zugewandt ist. Eine deartige Konfiguration ermöglicht eine einfache und leichtgewichtige Ausgestaltung des Trolleygehäuses.

Der Halter des Haltersystems umfasst ferner mindestens eine an der Außenfläche der Begrenzungswand angebrachte Riegeleinrichtung. Die Riegeleinrichtung ist dazu eingerichtet, mit einer Außenfäche der ersten Seitenwand des Trolleygehäuses zusammenzuwirken, wenn das Trolleygehäuse einen auf dem ersten Trolleyabstellplatz abgestellten Trolley aufnimmt. Die Riegeleinrichtung verhindert dann, dass sich das Trolleygehäuse in unerwünschter Weise durch die in der Begrenzungswand ausgebildete Öffnung bewegt. Ferner ist die Riegeleinrichtung dazu eingerichtet, mit einer in der Deckplatte des Trolleygehäuses ausgebildeten komplementären Riegeleinrichtung zusammenzuwirken, wenn das Trolleygehäuse einen auf dem zweiten Trolleyabstellplatz abgestellten Trolley aufnimmt. Die in der Deckplatte des Trolleygehäuses ausgebildete komplementäre Riegeleinrichtung kann beispielsweise in Form einer in der Deckplatte des Trolleygehäuses ausgebildeten Ausnehmung ausgeführt sein.

Die Trolleybefestigungsvorrichtung kann ferner ein weiteres Haltersystem zur lösbaren Befestigung mindestens eines Trolleys in dem Innenraum des Sanitärmoduls umfassen. Vorzugsweise umfasst das weitere Haltersystem einen an einer Innenfläche der Begrenzungswand angebrachten ersten Halter. Grundsätzlich kann der erste Halter in einem beliebigen Bereich der Innenfläche der Begrenzungswand angebracht sein. Vorzugsweise ist der erste Halter jedoch im Bereich einer Innenfläche eines nicht mit einer Türöffnung versehenen Seitenwandabschnitts der Begrenzungswand, beispielsweise gegenüber eines Waschbeckens montiert, so dass der Trolley unmittelbar benachbart zu der Innenfläche der Begrenzungswand positioniert und in dieser Position fixiert werden kann. Zusätzlich oder alternativ dazu kann das weitere Haltersystem der Trolleybefestigungsvorrichtung einen zweiten Halter umfassen, der an einem Boden des Sanitärmoduls und/oder einem in dem Innenraum des Sanitärmoduls angeordneten Monument angebracht ist. Ein zwei Halter umfassendes weiteres Haltersystem ermöglicht eine besonders sichere Befestigung des Trolleys.

Der erste Halter des weiteren Haltersystems kann derart schwenkbar an der Innenfläche der Begrenzungswand angebracht sein, dass der erste Halter zwischen einer Ruheposition und einer Betriebsposition verschwenkbar ist. In seiner Ruheposition erstreckt sich der erste Halter vorzugsweise im Wesentlichen parallel zu der Innenfläche der Begrenzungswand. Dies ermöglicht eine platzsparende Verstauung des ersten Halters, wenn der erste Halter nicht zur Befestigung eines Trolleys in dem Innenraum des Sanitärmoduls benötigt wird. In seiner Betriebsposition ist der erste Halter dagegen vorzugsweise dazu eingerichtet, sich im Wesentlichen parallel zu einer Deckfläche eines mittels des weiteren Haltersystems lösbar in dem Innenraum des Sanitärmoduls befestigten Trolleys zu erstrecken. Beispielsweise kann sich der erste Halter in seiner Betriebsposition im Wesentlichen senkrecht zur Innenfläche der Begrenzungswand von der Innenfläche der Begrenzungswand erstrecken.

Die Form des ersten Halters ist vorzugsweise an die Form und die Anzahl der mittels des weiteren Haltersystems lösbar in dem Innenraum des Sanitärmoduls zu befestigenden Trolleys angepasst. Beispielsweise ist die Länge des ersten Halters vorzugsweise so gewählt, dass der erste Halter in seiner Betriebsposition die Deckflächen einer gewünschten Anzahl von zur Unterbringung in dem Innenraum des Sanitärmoduls vorgesehenen Trolleys übergreift, wenn die Trolleys nebeneinander in dem Innenraum des Sanitärmoduls benachbart zu der Innenfläche der Begrenzungswand positioniert sind. Ferner kann der erste Halter mit einer Verriegelungsvorrichtung versehen sein, die dazu eingerichtet sind, mit einer komplementären an den Trolleys, beispielsweise im Bereich deren Deckflächen oder deren Seitenflächen vorgesehenen Verriegelungseinrichtung zusammenzuwirken, wenn der erste Halter aus seiner Ruheposition in seine Betriebsposition verschwenkt wird.

Ferner kann der erste Halter des weiteren Haltersystems, ebenso wie der Halter des Haltersystems zur Befestigung eines auf dem zweiten Trolleyabstellplatz abgestellten Trolleys, zwei gelenkig miteinander verbundene Abschnitte umfassen und im Übrigen, wie oben im Zusammenhang mit dem Haltersystem zur Befestigung eines auf dem zweiten Trolleyabstellplatz abgestellten Trolleys beschrieben, gestaltet sein. Ferner kann das weitere Haltersystem, ebenso wie das Haltersystem zur Befestigung eines auf dem zweiten Trolleyabstellplatz abgestellten Trolleys, einen Verriegelungsmechanismus zur Verriegelung des ersten Halters in seiner Ruheposition umfassen.

Der zweite Halter des weiteren Haltersystems ist vorzugsweise derart schwenkbar an dem Boden des Sanitärmoduls und/oder dem in dem Innenraum des Sanitärmoduls angeordneten Monument angebracht, dass der zweite Halter zwischen einer Ruheposition und einer Betriebsposition verschwenkbar ist. In seiner Ruheposition erstreckt sich der zweite Halter vorzugsweise im Wesentlichen senkrecht zu dem Boden des Sanitärmoduls und/oder im Wesentlichen parallel zu einer Seitenfläche des in dem Innenraum des Sanitärmoduls angeordneten Monuments. In seiner Ruheposition kann der zweite Halter dann platzsparend im Innenraum des Sanitärmoduls untergebracht werden. Wenn sich der zweite Halter dagegen in seiner Betriebsposition befindet, ist vorzugsweise ein freies Ende, d.h. ein nicht mit dem Boden des Sanitärmoduls und/oder dem in dem Innenraum des Sanitärmoduls angeordneten Monument verbundenes Ende des zweiten Halters dazu eingerichtet, mit dem sich in seiner Betriebsposition befindenden zweiten Halter und/oder einer Seitenfläche eines mittels des weiteren Haltersystems lösbar in dem Innenraum des Sanitärmoduls befestigten Trolleys zusammenzuwirken. Der zweite Halter sorgt somit für eine seitliche Fixierung des Trolleys, d.h. er verhindert, dass der Trolley, beispielsweise während des Starts oder während der Landung aus seiner Position benachbart zu der Innenfläche der Begrenzungswand rollt. Ein weiterer Verriegelungsmechanismus kann dazu dienen, den zweiten Halter in seiner Ruheposition zu verriegeln.

In einer bevorzugten Ausführungsform umfasst das erfindungsgemäße Sanitärmodul ferner eine Getränkezubereitungsvorrichtung, die ein Wasseranschlusssystem zur Versorgung der Getränkezubereitungsvorrichtung mit Wasser umfasst. Die Getränkezubereitungsvorrichtung kann eine zur Zubereitung von Tee oder Kaffee geeignete Getränkezubereitungsvorrichtung, aber auch eine Getränkezubereitungsvorrichtung zur Zubereitung von Kaltgetränken, z.B. in Form einer Postmixanlage sein. Das Wasseranschlusssystem der Getränkezubereitungsvorrichtung ist vorzugsweise an ein Wasserversorgungssystem des Sanitärmoduls zur Versorgung der Sanitäreinrichtung mit Wasser angeschlossen. In dem erfindungsgemäßen Sanitärmodul wird somit das ohnehin vorhandene Wasserversorgungssystems des Sanitärmoduls zur Versorgung der Getränkezubereitungsvorrichtung mit Wasser genutzt.

Vorzugsweise umfasst die Getränkezubereitungsvorrichtung ferner ein Abwasseranschlusssystem zur Entsorgung von von der Getränkezubereitungsvorrichtung erzeugtem Abwasser. Das Abwasseranschlusssystem der Getränkezubereitungsvorrichtung kann an ein Abwasserentsorgungssystem des Sanitärmoduls zur Entsorgung von von der Sanitäreinrichtung erzeugtem Abwasser angeschlossen sein. Ferner kann die Getränkezubereitungsvorrichtung ein elektrisches Anschlusssystem zur Versorgung der Getränkezubereitungsvorrichtung mit elektrischer Energie umfassen, das an ein elektrisches Versorgungssystem des Sanitärmoduls angeschlossen ist. Das elektrische Versorgungssystem des Sanitärmoduls dient beispielsweise dazu, in dem Sanitärmodul vorgesehene Beleuchtungselemente oder dergleichen mit elektrischer Energie zu versorgen.

Die Getränkezubereitungsvorrichtung ist vorzugsweise im Bereich der Außenfläche der Begrenzungswand angeordnet. Bei einer derartigen Ausgestaltung des erfindungsgemäßen Sanitärmoduls ist die Getränkezubereitungsvorrichtung auch dann zugänglich, wenn das Sanitärmodul in Benutzung ist. Beispielsweise kann die Außenfläche der Begrenzungswand mit einer Nische zur Aufnahme der Getränkezubereitungsvorrichtung versehen sein. Die Nische ist vorzugsweise in einer derartigen Höhe in der Begrenzungswand des Sanitärmoduls ausgebildet, dass die Deckfläche eines auf dem zweiten Trolleyabstellplatz abgestellten Trolleys, der sich in seiner Betriebsposition befindende Halter des Haltersystems zur Fixierung eines auf dem zweiten Trolleyabstellplatz abgestellten Trolleys oder die Deckplatte eines Trolleygehäuses als Ablag- und Arbeitsfläche genutzt werden kann.

Ein erfindungsgemäßes Flugzeug umfasst eine oben beschriebene Sanitärmodulanordnung.

Bei einem erfindungsgemäßen Verfahren zum Betreiben eines mit einer oben beschriebenen Sanitärmodulanordnung ausgestatteten Flugzeugs wird während des Starts und/oder während der Landung des Flugzeugs mindestens ein zur Aufnahme von Versorgungsgütern für die Passagiere in der Flugzeugkabine geeigneter Trolley auf dem ersten Trolleyabstellplatz der Sanitärmodulanordnung abgestellt.

Im Flugbetrieb des Flugzeugs, wenn sich das Flugzeug auf Reiseflughöhe befindet, wird der Trolley vorzugsweise außerhalb des Sanitärmoduls, benachbart zu der Außenfläche der Begrenzungswand des Sanitärmoduls auf dem zweiten Trolleyabstellplatz abgestellt.

Der Trolley kann mittels der Trolleybefestigungsvorrichtung in seiner Position auf dem ersten Trolleyabstellplatz und/oder in seiner Position auf dem zweiten Trolleyabstellplatz befestigt werden.

Bevorzugte Ausführungsbeispiele der Erfindung werden nun anhand der beigefügten schematischen Zeichnungen näher erläutert, von denen:
- Figur 1: eine Draufsicht einer ersten beispielhaften Sanitärmodulanordnung mit in einem Innenraum eines Sanitärmoduls auf einem ersten Trolleyabstellplatz abgestellten Trolleys zeigt, die nicht Gegenstand der Erfindung ist,
- Figur 2: eine Seitenansicht der Sanitärmodulanordnung gemäß Figur 1 zeigt,
- Figur 3: eine Draufsicht der Sanitärmodulanordnung gemäß Figur 1 mit benachbart zu einer Außenfläche einer Begrenzungswand des Sanitärmoduls auf einem zweiten Trolleyabstellplatz abgestellten Trolleys zeigt,
- Figur 4: eine Seitenansicht der Sanitärmodulanordnung gemäß Figur 3 zeigt,
- Figur 5: eine Detailansicht der Außenfläche der Begrenzungswand des in den Figuren 1 bis 4 dargestellten Sanitärmoduls zeigt,
- Figur 6: eine Draufsicht einer zweiten beispielhaften Sanitärmodulanordnung mit in einem Innenraum eines Sanitärmoduls auf einem ersten Trolleyabstellplatz abgestellten Trolleys zeigt, die nicht Gegenstand der Erfindung ist,
- Figur 7: eine Seitenansicht der Sanitärmodulanordnung gemäß Figur 6 mit benachbart zu einer Außenfläche einer Begrenzungswand des Sanitärmoduls auf einem zweiten Trolleyabstellplatz abgestellten Trolleys zeigt,
- Figur 8: eine weitere Seitenansicht der Sanitärmodulanordnung gemäß Figur 6 zeigt,
- Figur 9: eine Draufsicht einer erfindungsgemäßen Sanitärmodulanordnung mit in einem Trolleygehäuse aufgenommenen und in einem Innenraum eines Sanitärmoduls auf einem ersten Trolleyabstellplatz abgestellten Trolleys zeigt,
- Figur 10: eine dreidimensionale Ansicht der Sanitärmodulanordnung gemäß Figur 9 zeigt,
- Figur 11: eine Detailansicht der Sanitärmodulanordnung gemäß Figur 10 zeigt, die eine an einer Außenfläche einer Begrenzungswand des Sanitärmoduls angebrachte Riegeleinrichtung veranschaulicht,
- Figur 12: eine dreidimensionale Ansicht der Sanitärmodulanordnung gemäß Figur 9 mit in einem Trolleygehäuse aufgenommenen und benachbart zu einer Außenfläche einer Begrenzungswand des Sanitärmoduls auf einem zweiten Trolleyabstellplatz abgestellten Trolleys zeigt,
- Figur 13: eine Detailansicht der Sanitärmodulanordnung gemäß Figur 12 zeigt, die die an der Außenfläche der Begrenzungswand des Sanitärmoduls angebrachte Riegeleinrichtung im mit einer komplementären Riegeleinrichtung in einer Deckplatte des Trolleygehäuses verriegelten Zustand veranschaulicht, und
- Figur 14: eine Detailansicht der Sanitärmodulanordnung gemäß Figur 12 zeigt, die an Seitenwänden sowie einer Zwischenwand des Trolleygehäuses angebrachte Rollen veranschaulicht.

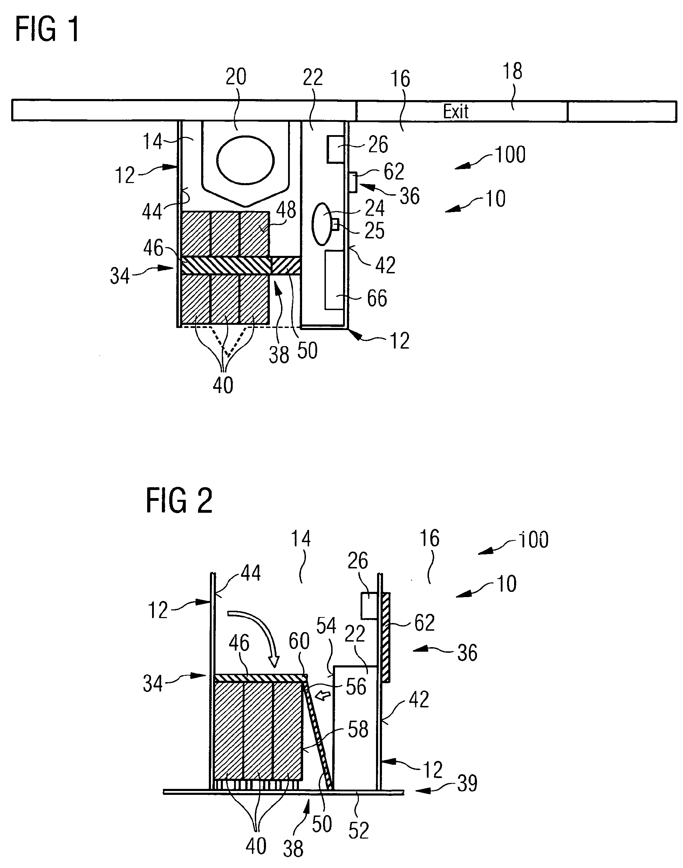

In den Figuren 1 bis 5 ist eine erste beispielhafte Sanitärmodulanordnung 100 mit einem Sanitärmodul 10 im in einer Flugzeugkabine installierten Zustand dargestellt, die nicht Gegenstand der Erfindung ist. Ein Innenraum 14 des Sanitärmoduls 10 ist durch eine Begrenzungswand 12 von einem zu dem Sanitärmodul 10 benachbarten Bereich 16 der Flugzeugkabine getrennt. Ein Abschnitt des Kabinenbereichs 16 vor einem Ausgang 18 der Flugzeugkabine ist nicht mit Passagiersitzen oder anderen Einbauten belegt.

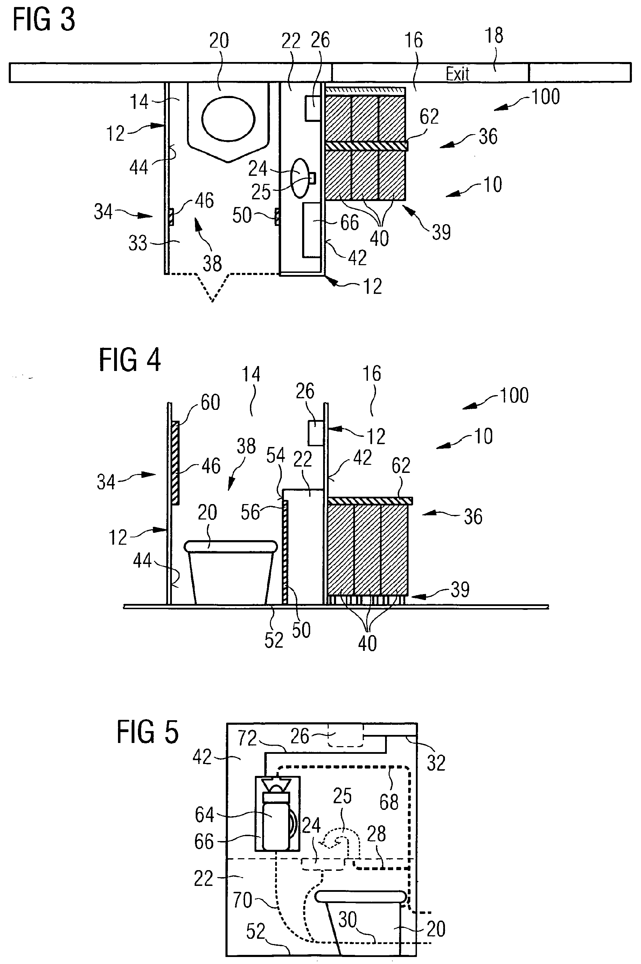

In dem Innenraum 14 des Sanitärmoduls 10 befinden sich eine Toilette 20 sowie ein schrankförmiges Monument 22. In das schrankförmige Monument 22 sind ein Waschbecken 24 sowie ein Wasserhahn 25 integriert. Ferner ist ein Beleuchtungselement 26 vorhanden. Wie aus Figur 5 ersichtlich wird, umfasst das Sanitärmoduls 10 ein Wasserversorgungssystem 28, das dazu dient, den Wasserhahn 25 sowie die Toilette 20 an ein zentrales Wasserversorgungssystem des Flugzeugs anzuschließen. Ferner ist ein Abwasserentsorgungssystem 30 vorhanden, das dazu dient, das Waschbecken 24 sowie die Toilette 20 an ein zentrales Abwasserentsorgungssystem des Flugzeugs anzuschließen. Schließlich ist ein elektrisches Versorgungssystem 32 vorhanden, das dazu dient, das Beleuchtungselement 26 an ein zentrales elektrisches Versorgungssystem des Flugzeugs anzuschließen.

In dem Innenraum 14 des Sanitärmoduls 10 ist ein erster Trolleyabstellplatz 33 vorgesehen. Eine Trolleybefestigungsvorrichtung 34 umfasst ein Haltersystem 36 sowie ein weiteres Haltersystem 38. Das Haltersystem 36 dient dazu, drei zur Aufnahme von Versorgungsgütern für die Passagiere in der Flugzeugkabine geeignete Trolleys 40 lösbar an einer Außenfläche 42 der Begrenzungswand 12 zu befestigen, wenn die Trolleys 40 benachbart zu der Außenfläche 42 der Begrenzungswand 12 auf einem zweiten Trolleyabstellplatz 39 abgestellt sind (siehe Figuren 3 und 4). Das weitere Haltersystem 38 dient dagegen dazu, die Trolleys 40 lösbar in dem Innenraum 14 des Sanitärmoduls 10 auf dem ersten Trolleyabstellplatz 33 zu fixieren (siehe Figuren 1 und 2).

Das weitere Haltersystem 38 umfasst einen schwenkbar an einer Innenfläche 44 der Begrenzungswand gegenüber dem Monument 22 angebrachten, stabförmigen ersten Halter 46. In seiner in den Figuren 3 und 4 veranschaulichten Ruheposition erstreckt sich der erste Halter 46 im Wesentlichen parallel zu der Innenfläche 44 der Begrenzungswand 12 und kann dadurch platzsparend im Innenraum 14 des Sanitärmoduls 10 verstaut werden. In seiner in den Figuren 1 und 2 veranschaulichten Betriebsposition erstreckt sich der erste Halter 46 dagegen im Wesentlichen senkrecht zu der Innenfläche 44 der Begrenzungswand 12 von der Innenfläche 44 der Begrenzungswand 12 und übergreift Deckflächen 48 der Trolleys 40.

Ein ebenfalls stabförmiger zweiter Halter 50 des weiteren Haltersystems 38 ist benachbart zu dem Monument 22 schwenkbar an einem Boden 52 des Sanitärmoduls 10 befestigt. In seiner in den Figuren 3 und 4 gezeigten Ruheposition erstreckt sich der zweite Halter 50 im Wesentlichen senkrecht zu dem Boden 52 des Sanitärmoduls 10 und im Wesentlichen parallel zu einer der Innenfläche 44 der Begrenzungswand 12 gegenüberliegenden Seitenfläche 54 des Monuments 22. In seiner in den Figuren 1 und 2 veranschaulichten Betriebsposition wirkt dagegen ein freies Ende 56 des zweiten Halters 50 mit einer Seitenfläche 58 eines der mittels des weiteren Haltersystems 38 in dem Innenraum des Sanitärmoduls 10 befestigten Trolleys 40 zusammen. Ferner befindet sich das freie Ende 56 des zweiten Halters 50 mit einem freien Ende 60 des ersten Halters 46 in Eingriff.

Durch den zweiten Halter 50 werden die Trolleys 40 seitlich in ihrer Position im Innenraum 14 des Sanitärmoduls 10 fixiert, d.h. der zweite Halter verhindert, dass sich die Trolleys 40 aus ihrer Position benachbart zu der Innenfläche 44 der Begrenzungswand 12 lösen. Der zweite Halter 50 kann, ebenso wie der erste Halter 46, mit einer Verriegelungsvorrichtung versehen sein, die dazu eingerichtet ist, mit einer an den Trolleys 40 vorgesehenen komplementären Verriegelungsvorrichtung zusammenzuwirken, um den ersten Halter 46 und/oder den zweiten Halter 50 an den Trolleys 50 zu fixieren. Ferner ist es denkbar, die Halter 46, 50 mit zueinander komplementären Verriegelungsvorrichtungen auszustatten, die eine Verbindung der beiden Halter 46, 50 miteinander ermöglichen.

Das Haltersystem 36 des Sanitärmoduls 10 umfasst einen stabförmigen Halter 62, der schwenkbar an der Außenfläche 42 des Sanitärmoduls 10 angebracht ist. In seiner in den Figuren 1 und 2 veranschaulichten Ruheposition erstreckt sich der Halter 62 im Wesentlichen parallel zu der Außenfläche 42 der Begrenzungswand 12, was eine platzsparende Verstauung des Halters 62 ermöglicht. In seiner in den Figuren 3 und 4 veranschaulichten Betriebsposition erstreckt sich der Halter 62 dagegen parallel zu den Deckflächen 48 der mittels des Haltersystems 36 lösbar an der Außenfläche 42 des Sanitärmoduls 10 befestigten Trolleys 40, d.h. im Wesentlichen senkrecht zu der Außenfläche 42 der Begrenzungswand 12 von der Außenfläche 42 der Begrenzungswand. Falls gewünscht, kann der Halter 62, ähnlich wie der erste Halter 46 des weiteren Haltersystems 38, mit einer Verriegelungsvorrichtung versehen sein, die dazu eingerichtet ist, mit einer im Bereich der Deckflächen 48 der Trolleys 40 vorgesehenen komplementären Verriegelungsvorrichtung zusammenzuwirken, um die Trolleys 40 sicher an dem Halter 62 zu fixieren.

Das Sanitärmodul 10 umfasst ferner eine Getränkezubereitungsvorrichtung 64 zur Zubereitung von Tee oder Kaffee. Die Getränkezubereitungsvorrichtung 64 ist in einer Nische 66 angeordnet, die im Bereich der Außenfläche 42 der Begrenzungswand 12 ausgebildet ist. Die Getränkezubereitungsvorrichtung 64 ist somit auch dann zugänglich, wenn das Sanitärmodul 10 in Benutzung ist.

Wie aus Figur 5 ersichtlich wird, umfasst die Getränkezubereitungsvorrichtung ein Wasseranschlusssystem 68, das zur Versorgung der Getränkezubereitungsvorrichtung 64 mit Frischwasser an das Wasserversorgungssystem 28 des Sanitärmoduls 10 angeschlossen ist. Ferner ist ein Abwasseranschlusssystem 70 der Getränkezubereitungsvorrichtung 64 mit dem Abwasserentsorgungssystem 30 des Sanitärmoduls 10 verbunden. Schließlich ist die Getränkezubereitungsvorrichtung 64 über ein elektrisches Anschlusssystem 72 an das elektrische Versorgungssystem des Sanitärmoduls 10 angeschlossen.

Während des Starts und der Landung des Flugzeugs können die Trolleys 40, wie in den Figuren 1 und 2 gezeigt, im Innenraum 14 des Sanitärmoduls 10 untergebracht werden. Das weitere Haltersystem 38 sichert die Trolleys 40 dabei in ihrer Position. Zur Sicherstellung des geforderten Hygienestandards sind die in den Trolleys 50 gelagerten Lebensmittel verpackt und/oder eingeschweißt. Ferner ist es denkbar, zusätzlich oder alternativ dazu, die Trolleys 40 selbst, beispielsweise mittels einer geeigneten Schutzfolie zu versiegeln.

Nach dem Start können die Trolleys 40 aus dem Innenraum 14 des Sanitärmoduls 10 entfernt und mittels des Haltersystems 36 in ihrer Position an der Außenfläche 42 der Begrenzungswand 12 befestigt werden, bis die Trolleys endgültig zur Versorgung der Passagiere mit den in den Trolleys 40 gelagerten Lebensmitteln benötigt werden.

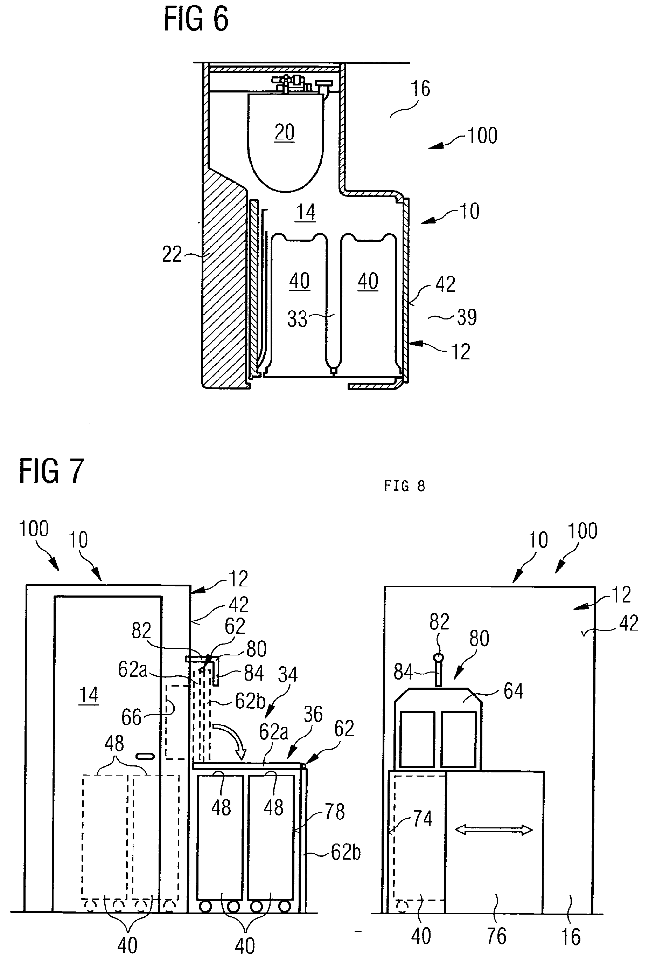

Eine in den Figuren 6 bis 8 veranschaulichte zweite beispielhaften Sanitärmodulanordnung 100, die nicht Gegenstand der Erfindung ist, unterscheidet sich von der in den Figuren 1 bis 5 gezeigten Konfiguration zunächst dadurch, dass in der Begrenzungswand 12 eine Öffnung 74 ausgebildet ist, durch die die Trolleys 40 zwischen dem ersten Trolleyabstellplatz 33 in dem Innenraum 14 des Sanitärmoduls 10 und dem zweiten Trolleyabstellplatz 39 benachbart zu der Außenfläche 42 der Begrenzungswand 12 verfahren werden können. Dadurch ist es nicht länger erforderlich, die Trolleys 40 durch eine Türöffnung des Sanitärmoduls 10 zu schieben. Die in der Begrenzungswand 12 ausgebildete Öffnung 74 ist durch eine Schiebetür 76 verschließbar.

Ferner umfasst die zweite Ausführungsform einer Sanitärmodulanordnung 100 gemäß den Figuren 6 bis 8 ein Haltersystem 36 mit einem zwei plattenförmige Abschnitte 62a, 62b aufweisenden Halter 62. Die beiden Abschnitte 62a, 62b des Halters 62 sind gelenkig miteinander verbunden. Der zwei Abschnitte 62a, 62b umfassende Halter 62 ist derart schwenkbar an der Außenfläche 42 der Begrenzungswand 12 angebracht, dass der Halter 62 zwischen einer Ruheposition und einer Betriebsposition verschwenkbar ist. Wenn sich der Halter 62 in seiner Ruheposition befindet (siehe Figur 7, gestrichelte Linien), erstrecken sich der erste und der zweite Abschnitt 62a, 62b des Halters 62 im Wesentlichen parallel zueinander und parallel zu der Außenfläche 42 der Begrenzungswand 12.

Wenn sich der Halter 62 dagegen in seiner Betriebsposition befindet (siehe Figur 7, durchgezogene Linien), erstreckt sich der erste Abschnitt 62a des Halters 62 parallel zu den Deckflächen 48 der auf dem zweiten Trolleyabstellplatz 39 abgestellten Trolleys 40, das heißt senkrecht zur Außenfläche 42 der Begrenzungswand 12 von der Außenfläche 42 der Begrenzungswand 12. Der zweite Abschnitt 62b des sich in seiner Betriebsposition befindenden Halters 62 erstreckt sich dagegen parallel zu einer von der Begrenzungswand 42 abgewandten Seitenfläche 78 der auf dem zweiten Trolleyabstellplatz 39 abgestellten Trolleys 40. Mit anderen Worten, wenn sich der Halter 62 in seiner Betriebsposition befindet, übergreift der Halter 62 die auf dem zweiten Trolleyabstellplatz 39 abgestellten Trolley 40 und sorgt so für eine sichere Fixierung der Trolleys 40 in ihrer Position auf dem zweiten Trolleyabstellplatz 39.

Wenn sich der Halter 62 in seiner Betriebsposition befindet, kann der plattenförmig ausgebildete erste Halterabschnitt 62a als Ablagefläche genutzt werden. Hierzu ist die die Getränkezubereitungsvorrichtung 64 aufnehmende Nische 66 in einer derartigen Höhe in der Außenfläche 42 der Begrenzungswand 12 angeordnet, dass eine bequeme Nutzung des Halterabschnitts 62a als Ablage- und Arbeitsfläche möglich ist.

Das Haltersystem 36 umfasst ferner einen Verriegelungsmechanismus 80 zur Verriegelung des Halters 62 in seiner Ruheposition. Der Verriegelungsmechanismus 80 ist an der Außenfläche 42 der Begrenzungswand 12 montiert und umfasst einen sich im Wesentlichen senkrecht zu der Außenfläche 42 der Begrenzungswand 12 von der Außenfläche 42 der Begrenzungswand 12 erstreckenden Befestigungsabschnitt 82. An dem Befestigungsabschnitt 82 ist ein Riegel 84 zwischen einer Verriegelungsstellung und einer Entriegelungsstellung schwenkbar befestigt. Der Riegel 84 erstreckt sich im Wesentlichen parallel zu der Außenfläche 42 der Begrenzungswand 12. In seiner Verriegelungsstellung (siehe Figur 7) ist der Riegel 84 so positioniert, dass der Verriegelungsmechanismus 80 den parallel zu der Außenfläche 42 der Begrenzungswand 12 angeordneten Halter 62 übergreift und in seiner Position hält. Dabei wirkt eine von der Außenfläche 42 der Begrenzungswand 12 abgewandte Fläche des Halters 62 mit dem Riegel 84 zusammen. Durch Verschwenken des Riegels 84 nach oben in seine Entriegelungsstellung wird der Halter 62 dagegen freigegeben, das heisst, die von der Außenfläche 42 der Begrenzungswand 12 abgewandte Fläche des Halters 62 wirkt nicht länger mit dem Riegel 84 zusammen, so dass der Halter 62 aus seiner Ruheposition in seine Betriebsposition verschwenkt werden kann.

Im Übrigen entsprechen der Aufbau und die Funktionsweise der Sanitärmodulanordnung 100 gemäß den Figuren 6 bis 8 dem Aufbau und der Funktionsweise des in den Figuren 1 bis 5 veranschaulichten Systems. Insbesondere kann auch die Sanitärmodulanordnung 100 gemäß den Figuren 6 bis 8 ein weiteres Haltersystem 38 zur Fixierung der Trolleys 40 auf dem ersten Trolleyabstellplatz 33 umfassen.

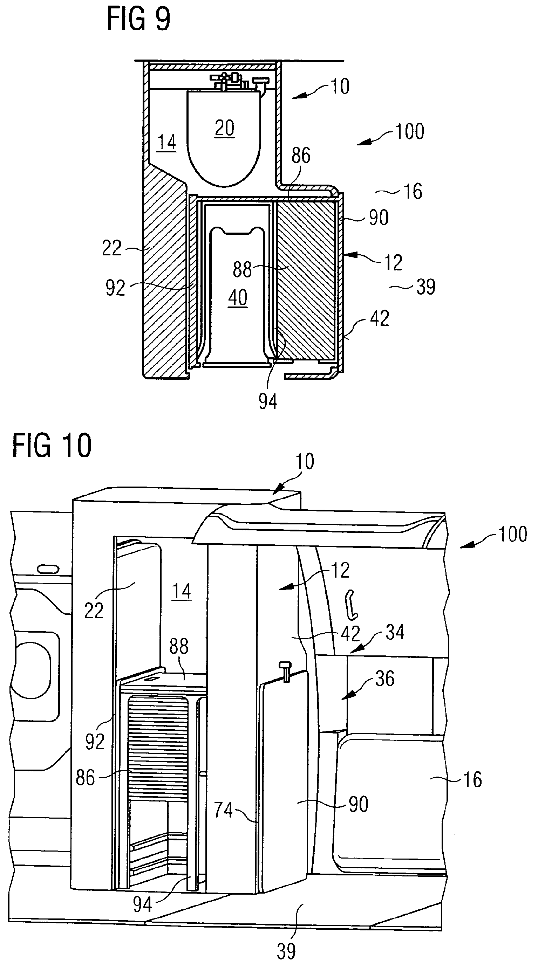

Eine in den Figuren 9 bis 14 veranschaulichte erfindungsgemäße einer Sanitärmodulanordnung 100 unterscheidet sich von der in den Figuren 6 bis 8 gezeigten Konfiguration durch ein Trolleygehäuse 86, das in der in den Figuren 9 bis 14 veranschaulichten beispielhaften Ausgestaltung zur Aufnahme von zwei Trolleys 40 geeignet ist. Das Trolleygehäuse 86 umfasst eine Deckplatte 88, eine sich im Wesentlichen senkrecht zu der Deckplatte 88 erstreckende erste Seitenwand 90 sowie eine der ersten Seitenwand 90 gegenüberliegende zweite Seitenwand 92. Ferner ist eine Zwischenwand 94 vorhanden, die sich im Wesentlichen parallel zu den Seitenwänden erstreckt 90, 92 und das Trolleygehäuse 86 in mehrere, zur Aufnahme jeweils eines Trolleys 40 geeignete Fächer unterteilt.

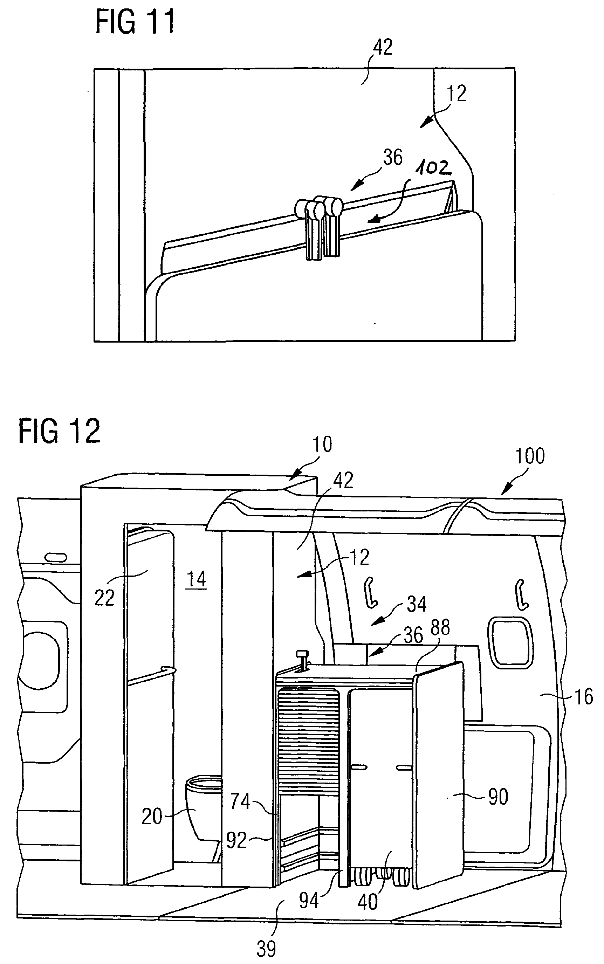

Wenn das Trolleygehäuse 86 in dem Innenraum 14 des Sanitärmoduls 10 positioniert ist (siehe Figuren 9 und 10) und auf dem ersten Trolleyabstellplatz 33 abgestellte Trolleys 40 aufnimmt, verschließt die erste Seitenwand 90 des Trolleygehäuses 86 die in der Begrenzungswand 12 ausgebildete Öffnung 74, durch die die Trolleys 40 zwischen dem ersten Trolleyabstellplatz 33 und dem zweiten Trolleyabstellplatz 39 verfahrbar sind. Wenn das Trolleygehäuse 86 dagegen außerhalb des Sanitärmoduls 10 positioniert ist (siehe Figur 12) und auf dem zweiten Trolleyabstellplatz 39 abgestellte Trolleys 40 aufnimmt, verschließt die zweite Seitenwand 92 des Trolleygehäuses 86 die in der Begrenzungswand 12 ausgebildete Öffnung 74. Das Trolleygehäuse 86 bildet somit eine Art "Schublade", die durch die in der Begrenzungswand 12 ausgebildete Öffnung 74 aus dem Sanitärmodul 10 herausgezogen werden kann, um die Trolleys 40 zwischen dem ersten Trolleyabstellplatz 33 und dem zweiten Trolleyabstellplatz 39 zu verfahren.

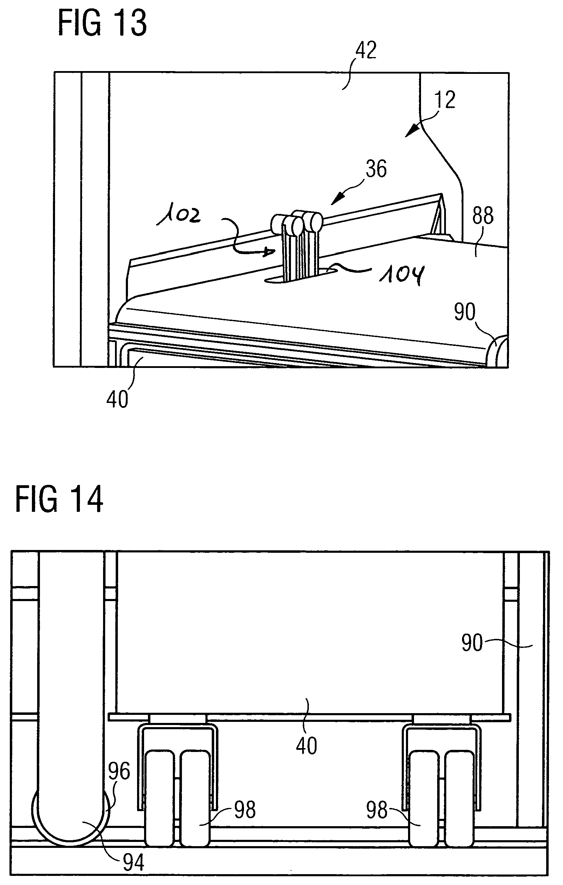

Wie insbesondere in Figur 14 zu erkennen ist, umfasst das Trolleygehäuse 86 eine Mehrzahl von Rollen 96, die an einem bodennahen Randabschnitt der Seitenwände 90 ,92 und der Zwischenwand 94 des Trolleygehäuses 86 befestigt sind und es ermöglichen, das Trolleygehäuse 86 durch die in der Begrenzungswand 12 ausgebildete Öffnung 74 zu fahren. Ferner ist das Trolleygehäuse 86 nicht mit einer Bodenplatte versehen, das heißt nach unten offen ausgeführt. Ohnehin an einer Bodenplatte der Trolleys 40 vorhandenen Rollen 98 können somit auch dann zum Verfahren der Trolleys 40 genutzt werden, wenn die Trolleys 40 in dem Trolleygehäuse 86 aufgenommen sind und durch die in der Begrenzungswand 12 ausgebildete Öffnung 74 zwischen dem ersten und dem zweiten Trolleyabstellplatz 33, 39 verfahren werden sollen.

Ferner ist die Gestaltung des Halters 62 so angepasst, dass der Halter 62 zur Verwendung mit einem Trolleygehäuse 86 geeignet ist. Hierzu umfasst der Halter 62 zwei drehbar an der Außenfläche 42 der Begrenzungswand 12 angebrachte Riegeleinrichtungen 102. Wenn das Trolleygehäuse 86 auf dem ersten Trolleyabstellplatz 33 abgestellte Trolleys 40 aufnimmt, das heißt im Innenraum 14 des Sanitärmoduls 10 angeordnet ist, wirken die Riegeleinrichtungen 102 mit einer Außenfäche der ersten Seitenwand 90 des Trolleygehäuses 86 zusammen (siehe Figur 11). Durch das Zusammenwirken der Riegeleinrichtungen 102 mit der ersten Seitenwand 90 des Trolleygehäuses 86 wird verhindert, dass sich das Trolleygehäuse 86 in unerwünschter Weise durch die in der Begrenzungswand 12 ausgebildete Öffnung 74 bewegt.

Wenn das Trolleygehäuse 86 dagegen auf dem zweiten Trolleyabstellplatz 39 abgestellte Trolleys 40 aufnimmt, das heißt außerhalb des Sanitärmoduls 10 benachbart zu der Außenfläche 42 der Begrenzungswand 12 angeordnet ist, wirken die Riegeleinrichtungen 102 mit einer in der Deckplatte 88 des Trolleygehäuses 86 ausgebildeten komplementären Riegeleinrichtung 104 zusammen (siehe Figur 13). Die in der Deckplatte 88 des Trolleygehäuses 86 ausgebildete komplementäre Riegeleinrichtung 104 ist in Form einer in der Deckplatte 88 des Trolleygehäuses 86 ausgebildeten Ausnehmung ausgeführt. Durch das Zusammenwirken der Riegeleinrichtungen 102 mit der in der Deckplatte 88 des Trolleygehäuses 86 ausgebildeten komplementären Riegeleinrichtung 104 werden das Trolleygehäuse 86 und damit die Trolleys 40 sicher in ihrer Position benachbart zu der Außenfläche 42 der Begrenzungswand 12 gehalten.

Im Übrigen entsprechen der Aufbau und die Funktionsweise der Sanitärmodulanordnung 100 gemäß den Figuren 9 bis 14 dem Aufbau und der Funktionsweise des in den Figuren 6 bis 8 veranschaulichten Systems. Insbesondere kann auch die Sanitärmodulanordnung 100 gemäß den Figuren 9 bis 14 eine Getränkezubereitungsvorrichtung zur Zubereitung von Tee oder Kaffee umfassen, die in einer im Bereich der Außenfläche 42 der Begrenzungswand 12 ausgebildeten Nische angeordnet ist. Wenn das Trolleygehäuse 86 benachbart zu der Außenfläche 42 der Begrenzungswand 12 außerhalb des Sanitärmoduls 10 angeordnet ist, kann die Deckplatte 88 des Trollegehäuses 86, ähnlich wie der Halter 62 in dem in den Figuren 6 bis 8 veranschaulichten System, als Ablage- und Arbeitsfläche genutzt werden.

## Patentansprüche

1. Sanitärmodulanordnung (100) zur Installation in einer Flugzeugkabine, mit:
- einem Sanitärmodul (10), dessen Innenraum (14) durch eine Begrenzungswand (12) von einem zu dem Sanitärmodul (10) benachbarten Bereich (16) der Flugzeugkabine getrennt ist, wobei in dem Innenraum (14) des Sanitärmoduls (10) eine Sanitäreinrichtung (20) und ein erster Trolleyabstellplatz (33) zur Unterbringung mindestens eines zur Aufnahme von Versorgungsgütern für die Passagiere in der Flugzeugkabine geeigneten Trolleys (40) in dem Innenraum des Sanitärmoduls (10) vorgehen sind,
- einem benachbart zu einer Außenfläche (42) der Begrenzungswand (12) vorgesehenen zweiten Trolleyabstellplatz (39) zur Unterbringung mindestens eines zur Aufnahme von Versorgungsgütern für die Passagiere in der Flugzeugkabine geeigneten Trolleys (40) außerhalb des Sanitärmoduls (10), wobei in der Begrenzungswand (12) eine verschließbare Öffnung (74) ausgebildet ist, durch die ein Trolley (40) zwischen dem ersten Trolleyabstellplatz (33) in dem Innenraum (14) des Sanitärmoduls (10) und dem benachbart zu einer Außenfläche (42) der Begrenzungswand (12) vorgesehenen zweiten Trolleyabstellplatz (39) verschoben werden kann,
- einem Trolleygehäuse (86) zur Aufnahme mindestens eines Trolleys (40), das eine Deckplatte (88), eine sich im Wesentlichen senkrecht zu der Deckplatte (88) erstreckende erste Seitenwand (90) sowie eine der ersten Seitenwand (90) gegenüberliegende zweite Seitenwand (92) umfasst, wobei die erste Seitenwand (90) des Trolleygehäuses (86) dazu eingerichtet ist, die in der Begrenzungswand (12) ausgebildete Öffnung (74) zu verschließen, wenn das Trolleygehäuse (86) einen auf dem ersten Trolleyabstellplatz (33) abgestellten Trolley (40) aufnimmt, und wobei die zweite Seitenwand (92) des Trolleygehäuses (86) dazu eingerichtet ist, die in der Begrenzungswand (12) ausgebildete Öffnung (74) zu verschließen, wenn das Trolleygehäuse (86) einen auf dem zweiten Trolleyabstellplatz (39) abgestellten Trolley (40) aufnimmt, und
- einer Trolleybefestigungsvorrichtung (34), die ein Haltersystem (36) zur lösbaren Befestigung eines auf dem zweiten Trolleyabstellplatz (39) abgestellten Trolleys (40) umfasst,
**dadurch gekennzeichnet, dass**
das Haltersystem (36) einen an der Außenfläche (42) der Begrenzungswand (12) angebrachten Halter (62) aufweist, wobei der Halter (62) des Haltersystems (36) mindestens eine an der Außenfläche (42) der Begrenzungswand (12) angebrachte Riegeleinrichtung (102) umfasst, die dazu eingerichtet ist, mit der ersten Seitenwand (90) des Trolleygehäuses (86) zusammenzuwirken, wenn das Trolleygehäuse (86) einen auf dem ersten Trolleyabstellplatz (33) abgestellten Trolley (40) aufnimmt, und die ferner dazu eingerichtet ist, mit einer in der Deckplatte (88) des Trolleygehäuses (86) ausgebildeten komplementären Riegeleinrichtung (104) zusammenzuwirken, wenn das Trolleygehäuse (86) einen auf dem zweiten Trolleyabstellplatz (39) abgestellten Trolley (40) aufnimmt.

2. Sanitärmodulanordnung nach Anspruch 1,
**dadurch gekennzeichnet, dass** der Halter (62) des Haltersystems (36) derart schwenkbar an der Außenfläche (42) der Begrenzungswand (12) angebracht ist, dass der Halter (62) zwischen einer Ruheposition, in der sich der Halter (62) im Wesentlichen parallel zu der Außenfläche (42) der Begrenzungswand (12) erstreckt, und einer Betriebsposition verschwenkbar ist, in der sich der Halter (62) zumindest abschnittsweise im Wesentlichen parallel zu einer Deckfläche (48) eines auf dem zweiten Trolleyabstellplatz (39) abgestellten Trolleys (40) erstreckt.

3. Sanitärmodulanordnung nach Anspruch 1 oder 2,
**dadurch gekennzeichnet, dass** der Halter (62) des Haltersystems (36) einen ersten Abschnitt (62a) sowie einen gelenkig mit dem ersten Abschnitt (62a) verbundenen zweiten Abschnitt (62b) umfasst und derart schwenkbar an der Außenfläche (42) der Begrenzungswand (12) angebracht ist, dass der Halter (62) zwischen einer Ruheposition, in der sich der erste und der zweite Abschnitt (62a, 62b) des Halters (62) im Wesentlichen parallel zu der Außenfläche (42) der Begrenzungswand (12) erstrecken, und einer Betriebsposition verschwenkbar ist, in der sich der erste Abschnitt (62a) des Halters (62) zumindest abschnittsweise im Wesentlichen parallel zu einer Deckfläche (48) eines auf dem zweiten Trolleyabstellplatz (39) abgestellten Trolleys (40) erstreckt, und in der sich der zweite Abschnitt (62b) des Halters (62) zumindest abschnittsweise im Wesentlichen parallel zu einer von der Begrenzungswand (12) abgewandten Seitenfläche (78) des auf dem zweiten Trolleyabstellplatz (39) abgestellten Trolleys (40) erstreckt.

4. Sanitärmodulanordnung nach Anspruch 2 oder 3,
**dadurch gekennzeichnet, dass** das Haltersystem (36) ferner einen Verriegelungsmechanismus (80) zur Verriegelung des Halters (62) in seiner Ruheposition umfasst.

5. Sanitärmodulanordnung nach Anspruch 1,
**dadurch gekennzeichnet, dass** das Trolleygehäuse (86) eine Mehrzahl von Rollen (96) umfasst, die an einem Randabschnitt der Seitenwände (90, 92) des Trolleygehäuses (86) befestigt sind.

6. Sanitärmodulanordnung nach einem der Ansprüche 1 bis 5,
**gekennzeichnet durch** eine Getränkezubereitungsvorrichtung (64), wobei ein Wasseranschlusssystem (68) der Getränkezubereitungsvorrichtung (64) zur Versorgung der Getränkezubereitungsvorrichtung (64) mit Wasser an ein Wasserversorgungssystem (28) des Sanitärmoduls (10) zur Versorgung der Sanitäreinrichtung (20) mit Wasser angeschlossen ist, wobei ein Abwasseranschlusssystem (70) der Getränkezubereitungsvorrichtung (64) zur Entsorgung von von der Getränkezubereitungsvorrichtung (64) erzeugtem Abwasser an ein Abwasserentsorgungssystem (30) des Sanitärmoduls (10) zur Entsorgung von von der Sanitäreinrichtung (20) erzeugtem Abwasser angeschlossen ist, und/oder wobei ein elektrisches Anschlusssystem (72) der Getränkezubereitungsvorrichtung (64) zur Versorgung der Getränkezubereitungsvorrichtung (64) mit elektrischer Energie an ein elektrisches Versorgungssystem (32) des Sanitärmoduls (10) angeschlossen ist.

7. Sanitärmodulanordnung nach Anspruch 6,
**dadurch gekennzeichnet, dass** die Getränkezubereitungsvorrichtung (64) im Bereich der Außenfläche (42) der Begrenzungswand (12) angeordnet ist.

8. Flugzeug mit einer Sanitärmodulanordnung (100) nach einem der Ansprüche 1 bis 7.

9. Verfahren zum Betreiben eines Flugzeugs nach Anspruch 8, bei dem während des Starts und/oder während der Landung des Flugzeugs mindestens ein zur Aufnahme von Versorgungsgütern für die Passagiere in der Flugzeugkabine geeigneter Trolley (40) auf dem ersten Trolleyabstellplatz (33) der Sanitärmodulanordnung (100) abgestellt wird.

10. Verfahren nach Anspruch 9,
**dadurch gekennzeichnet, dass** der Trolley (40) im Flugbetrieb des Flugzeugs, wenn sich das Flugzeug auf Reiseflughöhe befindet, auf dem zweiten Trolleyabstellplatz (39) der Sanitärmodulanordnung (100) abgestellt wird.

## Claims

1. Sanitary module arrangement (100) for installation in an aircraft cabin, having:
- a sanitary module (10), the interior (14) of which is separated by a boundary wall (12) from a region (16) of the aircraft cabin adjacent to the sanitary module (10), a sanitary fitment (20) and a first trolley parking place (33) for accommodating at least one trolley (40) suitable for holding supply goods for the passengers in the aircraft cabin being provided in the interior of the sanitary module (10),
- a second trolley parking place (39), provided adjacent to an outer surface (42) of the boundary wall (12), for accommodating at least one trolley (40) suitable for holding supply goods for the passengers in the aircraft cabin outside the sanitary module (10), wherein there is formed in the boundary wall (12) a closable opening (74), through which a trolley (40) can be displaced between the first trolley parking place (33) in the interior (14) of the sanitary module (10) and the second trolley parking place (39) provided adjacent to an outer surface (42) of the boundary wall (12),
- a trolley housing (86) for accommodating at least one trolley (40), which housing comprises a top plate (88), a first side wall (90) extending substantially perpendicularly to the top plate (88), and a second side wall (92) opposite the first side wall (90), the first side wall (90) of the trolley housing (86) being configured to close the opening (74) formed in the boundary wall (12) when the trolley housing (86) accommodates a trolley (40) parked in the first trolley parking place (33), and the second side wall (92) of the trolley housing (86) being configured to close the opening (74) formed in the boundary wall (12) when the trolley housing (86) accommodates a trolley (40) parked in the second trolley parking place (39), and
- a trolley fastening device (34) which comprises a holder system (36) for detachably fastening a trolley (40) parked in the second trolley parking place (39), the holder system (36) having a holder (62) attached to the outer surface (42) of the boundary wall (12),
**characterised in that**
the holder (62) of the holder system (36) comprises at least one latch device (102) attached to the outer surface (42) of the boundary wall (12), which is configured to cooperate with the first side wall (90) of the trolley housing (86) when the trolley housing (86) accommodates a trolley (40) parked in the first trolley parking place (33), and which is furthermore configured to cooperate with a complementary latch device (104), formed in the top plate (88) of the trolley housing (86), when the trolley housing (86) accommodates a trolley (40) parked in the second trolley parking place (39).

2. Sanitary module arrangement according to Claim 1,
**characterised in that** the holder (62) of the holder system (36) is pivotably attached to the outer surface (42) of the boundary wall (12) in such a manner that the holder (62) is pivotable between a rest position, in which the holder (62) extends substantially parallel to the outer surface (42) of the boundary wall (12), and an operating position, in which the holder (62) extends, at least in sections, substantially parallel to a top surface (48) of a trolley (40) parked in the second trolley parking place (39).

3. Sanitary module arrangement according to Claim 1 or 2,
**characterised in that** the holder (62) of the holder system (36) comprises a first section (62a) and a second section (62b) articulatedly connected to the first section (62a) and is pivotably attached to the outer surface (42) of the boundary wall (12) in such a manner that the holder (62) is pivotable between a rest position, in which the first and the second section (62a, 62b) of the holder (62) extend substantially parallel to the outer surface (42) of the boundary wall (12), and an operating position, in which the first section (62a) of the holder (62) extends, at least in sections, substantially parallel to a top surface (48) of a trolley (40) parked in the second trolley parking place (39), and in which the second section (62b) of the holder (62) extends, at least in sections, substantially parallel to a lateral surface (78), facing away from the boundary wall (12), of the trolley (40) parked in the second trolley parking place (39).

4. Sanitary module arrangement according to Claim 2 or 3,
**characterised in that** the holder system (36) furthermore comprises a latching mechanism (80) for latching the holder (62) in its rest position.

5. Sanitary module arrangement according to Claim 1,
**characterised in that** the trolley housing (86) comprises a plurality of rollers (96) which are fastened to an edge section of the side walls (90, 92) of the trolley housing (86).

6. Sanitary module arrangement according to one of Claims 1 to 5,
**characterised by** a drink preparation device (64), wherein, for supplying the drink preparation device (64) with water, a water connection system (68) of the drink preparation device (64) is connected to a water supply system (28) of the sanitary module (10) for supplying the sanitary fitment (20) with water, wherein, for disposing of wastewater produced by the drink preparation device (64), a wastewater connection system (70) of the drink preparation device (64) is connected to a wastewater disposal system (30) of the sanitary module (10) for disposing of wastewater produced by the sanitary fitment (20), and/or wherein, for supplying the drink preparation device (64) with electrical energy, an electrical connection system (72) of the drink preparation device (64) is connected to an electrical supply system (32) of the sanitary module (10).

7. Sanitary module arrangement according to Claim 6,
**characterised in that** the drink preparation device (64) is arranged in the region of the outer surface (42) of the boundary wall (12).

8. Aircraft having a sanitary module arrangement (100) according to one of Claims 1 to 7.

9. Method for operating an aircraft according to Claim 8, in which at least one trolley (40) suitable for holding supply goods for the passengers in the aircraft cabin is parked in the first trolley parking place (33) of the sanitary module arrangement (100) during the takeoff and/or during the landing of the aircraft.

10. Method according to Claim 9,
**characterised in that** the trolley (40) is parked in the second trolley parking place (39) of the sanitary module arrangement (100) when the aircraft is flying at cruising altitude.

## Revendications

1. Ensemble module sanitaire (100) destiné à être installé dans une cabine d'aéronef, comprenant :
- un module sanitaire (10) dont l'espace intérieur (14) est séparé d'une zone (16) de la cabine d'aéronef adjacente au module sanitaire (10) par une paroi de délimitation (12), un dispositif sanitaire (20) et une première place de garage de chariot (33) pour ranger au moins un chariot (40) adapté pour recevoir des fournitures pour les passagers dans la cabine d'aéronef étant prévus dans l'espace intérieur du module sanitaire (10),
- une deuxième place de garage de chariot (39) prévue de manière adjacente à une surface extérieure (42) de la paroi de délimitation (12), pour ranger au moins un chariot (40) adapté pour recevoir des fournitures pour les passagers dans la cabine d'aéronef à l'extérieur du module sanitaire (10), une ouverture (74) pouvant être fermée étant formée dans la paroi de délimitation (12), à travers laquelle un chariot (40) peut être déplacé entre la première place de garage de chariot (33) dans l'espace intérieur (14) du module sanitaire (10) et la deuxième place de garage de chariot (39) prévue de manière adjacente à une surface extérieure (42) de la paroi de délimitation (12),
- un logement de chariot (86) destiné à recevoir au moins un chariot (40), qui comprend une plaque supérieure (88), une première paroi latérale (90) s'étendant sensiblement perpendiculairement à la plaque supérieure (88) ainsi qu'une deuxième paroi latérale (92) opposée à la première paroi latérale (90), la première paroi latérale (90) du logement de chariot (86) étant agencée pour fermer l'ouverture (74) formée dans la paroi de délimitation (12) lorsque le logement de chariot (86) reçoit un chariot (40) garé sur la première place de garage de chariot (33), et la deuxième paroi latérale (92) du logement de chariot (86) étant agencée pour fermer l'ouverture (74) formée dans la paroi de délimitation (12) lorsque le logement de chariot (86) reçoit un chariot (40) garé sur la deuxième place de garage de chariot (39), et
- un dispositif de fixation de chariot (34) qui comprend un système de retenue (36) pour la fixation détachable d'un chariot (40) garé sur la deuxième place de garage de chariot (39),
**caractérisé en ce que** le système de retenue (36) présente un moyen de retenue (62) monté sur la surface extérieure (42) de la paroi de délimitation (12), le moyen de retenue (62) du système de retenue (36) comprenant au moins un dispositif de verrouillage (102) monté sur la surface extérieure (42) de la paroi de délimitation (12), qui est agencé pour coopérer avec la première paroi latérale (90) du logement de chariot (86) lorsque le logement de chariot (86) reçoit un chariot (40) garé sur la première place de garage de chariot (33), et qui est en outre agencé pour coopérer avec un dispositif de verrouillage (104) complémentaire formé sur la plaque supérieure (88) du logement de chariot (86) lorsque le logement de chariot (86) reçoit un chariot (40) garé sur la deuxième place de garage de chariot (39).

2. Ensemble module sanitaire selon la revendication 1,
**caractérisé en ce que** le moyen de retenue (62) du système de retenue (36) est monté pivotant sur la surface extérieure (42) de la paroi de délimitation (12) de telle façon que le moyen de retenue (62) puisse pivoter entre une position de repos, dans laquelle le moyen de retenue (62) s'étend sensiblement parallèlement à la surface extérieure (42) de la paroi de délimitation (12), et une position de service, dans laquelle le moyen de retenue (62) s'étend au moins sur certaines parties sensiblement parallèlement à une surface supérieure (48) d'un chariot (40) garé sur la deuxième place de garage de chariot (39).

3. Ensemble module sanitaire selon la revendication 1 ou 2,
**caractérisé en ce que** le moyen de retenue (62) du système de retenue (36) comprend une première partie (62a) ainsi qu'une deuxième partie (62b) reliée de façon articulée à la première partie (62a) et est monté pivotant sur la surface extérieure (42) de la paroi de délimitation (12) de telle façon que le moyen de retenue (62) puisse pivoter entre une position de repos, dans laquelle la première et la deuxième partie (62a, 62b) du moyen de retenue (62) s'étendent sensiblement parallèlement à la surface extérieure (42) de la paroi de délimitation (12), et une position de service dans laquelle la première partie (62a) du moyen de retenue (62) s'étend au moins sur certaines parties sensiblement parallèlement à une surface supérieure (48) d'un chariot (40) garé sur la deuxième place de garage de chariot (39) et dans laquelle la deuxième partie (62b) du moyen de retenue (62) s'étend au moins sur certaines parties sensiblement parallèlement à une surface latérale (78) du chariot (40) garé sur la deuxième place de garage de chariot (39) qui est éloignée de la paroi de délimitation (12).

4. Ensemble module sanitaire selon la revendication 2 ou 3,
**caractérisé en ce que** le système de retenue (36) comprend en outre un mécanisme de verrouillage (80) pour verrouiller le moyen de retenue (62) dans sa position de repos.

5. Ensemble module sanitaire selon la revendication 1,
**caractérisé en ce que** le logement de chariot (86) comprend une pluralité de roulettes (96) qui sont fixée à une partie de bord des parois latérales (90, 92) du logement de chariot (86).

6. Ensemble module sanitaire selon l'une des revendications 1 à 5,
**caractérisé par** un dispositif de préparation de boissons (64), un système de raccordement d'eau (68) du dispositif de préparation de boissons (64) pour alimenter le dispositif de préparation de boissons (64) en eau étant raccordé à un système d'alimentation en eau (28) du module sanitaire (10) pour alimenter le dispositif sanitaire (20) en eau, un système de raccordement d'eaux usées (70) du dispositif de préparation de boissons (64) pour évacuer les eaux usées produites par le dispositif de préparation de boissons (64) étant raccordé à un système d'évacuation d'eaux usées (30) du module sanitaire (10) pour évacuer les eaux usées produites par le dispositif sanitaire (20), et/ou un système de raccordement électrique (72) du dispositif de préparation de boissons (64) pour alimenter le dispositif de préparation de boissons (64) en énergie électrique étant raccordé à un système d'alimentation électrique (32) du module sanitaire (10).

7. Ensemble module sanitaire selon la revendication 6,
**caractérisé en ce que** le dispositif de préparation de boissons (64) est disposé dans la zone de la surface extérieure (42) de la paroi de délimitation (12).

8. Aéronef équipé d'un ensemble module sanitaire (100) selon l'une des revendications 1 à 7.

9. Procédé pour exploiter un aéronef selon la revendication 8, dans lequel, pendant le décollage et/ou pendant l'atterrissage de l'aéronef, au moins un chariot (40) adapté pour recevoir des fournitures pour les passagers dans la cabine d'aéronef est garé sur la première place de garage de chariot (33) de l'ensemble module sanitaire (100).

10. Procédé selon la revendication 9,
**caractérisé en ce que**, en vol, lorsque l'aéronef se trouve à l'altitude de croisière, le chariot (40) est garé sur la deuxième place de garage de chariot (39) de l'ensemble module sanitaire (100).
